Europäisches Patentamt

European Patent Office

Office européen des brevets

(19)

(11) EP 0 858 155 A1

## (12) DEMANDE DE BREVET EUROPEEN

(43) Date de publication:
12.08.1998 Bulletin 1998/33

(51) Int Cl.⁶: H02P 21/00, H02M 7/5387

(21) Numéro de dépôt: 98400187.5

(22) Date de dépôt: 29.01.1998

(84) Etats contractants désignés:
AT BE CH DE DK ES FI FR GB GR IE IT LI LU MC
NL PT SE
Etats d'extension désignés:
AL LT LV MK RO SI

(30) Priorité: 06.02.1997 FR 9701346

(71) Demandeur: ALCATEL ALSTHOM COMPAGNIE
GENERALE D'ELECTRICITE
75008 Paris (FR)

(72) Inventeurs:
• Bornard,Guy,
c/o Lab.d'Aut. de Grenoble INPG-CNRS
38402 St-Martin-d'Herres (FR)

• Bethoux,Olivier
75015 Paris (FR)
• Poullain,Serge
91700 Ste Geneviève des Bois (FR)
• Thomas,Jean-Luc
77810 Thomery (FR)
• Ait Mahrez,Camal
45200 Thomery (FR)

(74) Mandataire: Scheer, Luc et al
COMPAGNIE FINANCIERE ALCATEL
Département Propriété Industrielle
30, avenue Kléber
75116 Paris (FR)

(54) **Procédé de régulation d'une machine tournante, système d'asservissement pour mettre en oeuvre ledit procédé, et machine tournante pourvue d'un tel système**

(57) L'invention concerne un procédé de régulation d'une machine tournante à n phases alimentée par l'intermédiaire d'un onduleur de tension définissant $m^n$ états du vecteur tension de phase stator, la machine étant asservie en couple électromagnétique $\Gamma$ et en flux statorique $|\phi_s|$,

selon l'invention un calculateur calcule une succession de n états du vecteur tension de phase pour rap-

procher le couple $\Gamma$ et le flux $|j_s|$ I des consignes $\Gamma_{ref}$, $|\phi_s|_{ref}$,

à chaque échantillonnage, le temps d'application restant de l'état en cours et les temps d'application mis à jour des états futurs du vecteur de phase, et

de façon asynchrone avec les instants d'échantillonnage, le calculateur envoi des signaux de commande des SPmLL pour commuter de l'état en cours vers l'état suivant.

FIG.1

## Description

L'invention concerne un procédé de régulation d'une machine tournante, un système d'asservissement pour mettre en oeuvre ledit procédé, et une machine tournante pourvue d'un tel système.

Plus précisément la présente invention concerne un procédé de régulation en couple électromagnétique et en flux statorique d'une machine tournante asynchrone présentant un haut niveau dynamique depuis les basses vitesses jusqu'aux hautes vitesses.

US-A-4678248 concerne un procédé de régulation où les grandeurs de contrôle sont le couple électromagnétique et le flux statorique.

Cette méthode passe par la modélisation vectorielle de la machine et de l'onduleur de tension.

Pour la machine on sait que le couple électromagnétique est fonction de l'angle existant entre le vecteur tournant flux rotorique et le vecteur tournant flux statorique et les modules de ces vecteurs flux. Autrement dit le couple électromagnétique $\Gamma_{em}$ est fonction du produit vectoriel des vecteurs flux tournant :

$$\Gamma_{em} = K (\phi_R \times \phi_S)$$

Le vecteur tension stator $V_s$ est délivré par un onduleur de tension triphasée chaque phase comprenant un interrupteur à deux états (SP2LL : Single Pole 2 Logic Levels / pôle unique à 2 niveaux logiques). De ce fait, le vecteur tension stator $V_s$ peut prendre 8 états $V_1...V_8$ ($2^3$), dont deux $V_1$, $V_8$ d'amplitude nulle (états nuls) dans le repère fixe statorique ($\alpha$, $\beta$), en fonction de la combinaison des trois SP2LL de l'onduleur.

Le système dit DTC (Direct Torque Control) repose, dans le repère statorique ($\alpha,\beta$), sur le maintien du module l$\phi_S$l du vecteur tournant de flux statorique $\phi_S$ dans une bande d'hystérésis H, et sur le contrôle du couple $\Gamma_{em}$ en accélérant le vecteur tournant de flux statorique $\phi_S$ par rapport au vecteur de flux rotorique $\phi_R$ pour une augmentation du couple $\Gamma_{em}$ (augmentation de l'angle entre les deux vecteurs de flux) et en arrêtant le vecteur de flux statorique $\phi_S$ pour que le vecteur de flux rotorique $\phi_R$ le rattrape pour diminuer le couple $\Gamma_{em}$ (diminution de l'angle entre les deux vecteurs de flux).

Le contrôle du vecteur de flux statorique $\phi_S$ est assuré par l'intermédiaire d'une table finie. Cette table contient, pour une localisation $N_i$ (i = 1...6) donnée du vecteur de flux statorique $\phi_S$ tournant dans le plan du stator ($\alpha,\beta$), les états $V_1...V_8$ du vecteur tension de phase stator Vs qui permettent d'arrêter le vecteur flux statorique (états nuls $V_1$, $V_8$), et ceux qui permettent d'ouvrir l'angle entre les vecteurs de flux $\phi_S$ $\phi_R$ tout en maintenant le vecteur de flux statorique $\phi_S$ dans la bande d'hystérésis H.

Dans le cas de faible vitesse de rotation du rotor, la dynamique de réponse de la solution ci-dessus est très mauvaise. Notamment, le temps de réponse de l'échelon négatif est de l'ordre de quatre fois le temps de réponse d'un échelon positif de même amplitude.

En outre, la technique proposée dédie le contrôle du flux statorique (maintien du module du flux statorique dans la bande d'hystérésis) au Contrôle du couple. Les configurations dans lesquelles on souhaite un contrôle du Flux statorique concomitant au contrôle du couple $\Gamma_{em}$ ne sont pas prévues.

EP-A-0674381 concerne un procédé de contrôle d'une machine tournante asynchrone reprenant pour une gamme de vitesses la méthode DTC précédente en rajoutant une hystérésis sur le couple. En outre, le procédé prévoit deux modes de fonctionnement supplémentaires, un pour des faibles vitesses et l'autre pour les grandes vitesses.

Le mode de fonctionnement aux faibles vitesses repose sur l'imposition d'une fréquence de découpage de l'onduleur.

Le mode de fonctionnement à hautes vitesses est le mode pleine onde.

L'un des inconvénients majeurs des méthodes précédentes résulte du fait que les commutations d'un état du vecteur de phase vers un autre état du vecteur de phase sont réalisés lors des instants d'échantillonnage lorsque le système de contrôle constate que l'une des hystérésis a été franchie. De ce fait, pour que le système ait une bonne dynamique (éviter que le franchissement ne soit trop important) il est nécessaire d'utiliser des périodes d'échantillonnage très courtes ($T_{ech}$ = 50 $\mu$s ; $f_{ech}$ = 20kHz) induisant des fréquences d'échantillonnage élevées sensiblement supérieures aux fréquences d'échantillonnage généralement utilisées dans des dispositifs en temps réel.

En outre, le problème du contrôle du flux statorique (maintien du module du flux statorique dans la bande d'hystérésis) dédié au Contrôle du couple n'est pas résolu. Les configurations dans lesquelles on souhaite un contrôle du Flux statorique concomitant au contrôle du couple $\Gamma_{em}$ ne sont toujours pas prévues.

Enfin le passage en mode pleine onde ne se fait pas simplement.

L'un des buts de la présente invention est de proposer un procédé de régulation en couple électromagnétique et en flux statorique d'une machine tournante asynchrone dans lequel les instants de commutation de l'onduleur sont prédits par le calcul, et réalisés de façon asynchrone avec les instants d'échantillonnage ou de calcul. De cette manière, les fréquences d'échantillonnages n'ont plus besoin d'être aussi élevées que dans l'art antérieur, et sont réduites jusqu'à des fréquences utilisées de façon standard dans les dispositifs temps réel connus (entre 2kHz et 5kHz)

Un autre but de la présente invention est de proposer un procédé de régulation en couple électromagnétique et en flux statorique d'une machine tournante asynchrone dans lequel la régulation du couple électromagnétique et du flux statorique peut être concomitante.

Un autre but de la présente invention est de proposer un procédé de régulation en couple électromagnétique et en flux statorique d'une machine tournante asynchrone dans lequel le passage en mode pleine onde ne nécessite aucun changement de stratégie.

A cet effet l'invention concerne un procédé de régulation d'une machine tournante à n phases alimentée en courant alternatif par l'intermédiaire d'un onduleur de tension comprenant n SPmLL définissant $m^n$ états du vecteur tension de phase stator, ladite machine étant asservie en couple électromagnétique $\Gamma$ et en flux statorique $|\phi_S|$ à des consignes $\Gamma_{ref}$, $|\phi_S|_{ref}$ par un système d'asservissement pouvant suivre différentes stratégies de contrôle, chaque stratégie ayant des conditions d'application, ledit système d'asservissement comprenant un ensemble de capteurs dont les valeurs captées sont transmises à un observateur-échantillonneur, les sorties de l'observateur, échantillonnées selon une période d'échantillonnage donnée $T_e$, étant injectées dans un calculateur, ledit calculateur restituant en sortie des signaux de commande des SPmLL de l'onduleur de tension.

Selon l'invention le calculateur calcule, en fonction des conditions d'application de la stratégie de contrôle utilisée, d'une part une succession de n états du vecteur tension de phase pour rapprocher le couple $\Gamma$ et le flux $|\phi_S|$ des consignes $\Gamma_{ref}$, $|\phi_S|_{ref}$, par commutation successive desdits n états de la succession, et d'autre part le temps d'application $dt_k$ $k \in \{1, ..., n\}$ de chacun desdits n états de la succession,

à chaque échantillonnage, le calculateur calcule le temps d'application de l'état en cours et les temps d'application mis à jour des états futurs du vecteur de phase, et

de façon asynchrone avec les instants d'échantillonnage et de calcul, à la fin du temps d'application de l'état en cours, le calculateur envoi des signaux de commande des SPmLL pour commuter de l'état en cours vers l'état suivant.

Dans un mode de fonctionnement, le calculateur effectuant les calculs dans un référentiel de calcul tridimensionnel orthogonal comprenant le plan statorique ($\phi_{s\alpha}$, $\phi_{s\beta}$) du flux stator $\phi_S$ et un axe, perpendiculaire audit plan statorique ($\phi_{s\alpha}$, $\phi_{s\beta}$), représentant le couple $\Gamma$, les consignes $\Gamma_{ref}$, $|\phi_S|_{ref}$, étant représentées par un cercle $\eta_{ref}$ contenu dans un plan parallèle au plan statorique ($\phi_{s\alpha}$, $\phi_{s\beta}$), centré sur ledit axe perpendiculaire, ayant un rayon de $|\phi_S|_{ref}$ et interceptant ledit axe perpendiculaire en $\Gamma_{ref}$, les valeurs $\Gamma$, $\phi_S$ fournies par la machine tournante, étant représentées par un point A ($\phi_{s\alpha}$, $\phi_{s\beta}$, $\Gamma$) sur un cercle $\eta$ contenu dans un plan parallèle au plan statorique ($\phi_{s\alpha}$, $\phi_{s\beta}$), centré sur ledit axe perpendiculaire, ayant un rayon de $|\phi_S|$ et interceptant ledit axe perpendiculaire en $\Gamma$, la stratégie de contrôle est une stratégie asynchrone avec la fréquence de rotation de la machine tournante dans laquelle la succession de n états du vecteur tension est calculée pour que le point A ($\phi_{s\alpha}$, $\phi_{s\beta}$, $\Gamma$) rallie un point D quelconque d'un cercle $\eta_{cal}$, centré sur ledit axe perpendiculaire, ayant un rayon de $|\phi_S|_{cal}$ et interceptant ledit axe perpendiculaire en $\Gamma_{cal}$ par application successive des n états, dans un temps donné prédéterminé, ledit calculateur calculant l'équation du cercle $\eta_{cal}$ pour que sur la durée d'application de la succession, le couple $\Gamma$ moyen et le flux statorique $|\phi_S|$ moyen générés soient sensiblement égaux respectivement aux consignes $\Gamma_{ref}$, $|\phi_S|_{ref}$.

En particulier, n étant égal à trois, la stratégie de contrôle est basée sur l'application d'un cycle SOCMLI telle que le calculateur recherche l'existence d'une triplette unique d'états ($V_0$, $V_i$, $V_{adj}$) $i \in \{2...m^n-1\}$ du vecteur tension constituant une succession de trois états, comprenant un état de départ $V_i$, un des deux états $V_{adj}$ adjacent à $V_i$ et un état nul ($V_0$), dont les temps d'application respectifs $dt_i$, $dt_{adj}$, $dt_0$ sont positifs et tels que leur somme soit égale à la moitié de la période de découpage $T_d$ de l'onduleur.

De ce fait, les étapes du procédé sont :

a) le calculateur cherche la triplette unique ($V_0$, $V_i$, $V_{adj}$) $i \in \{2 ... m^n-1\}$, et calcule un point d'arrivée présumé D' sur le cercle $\eta_{cal}$.

b) il envoi des signaux de commande des SPmLL pour commuter dans l'état $V_i$,

c) à chaque échantillonnage, le calculateur calcule, pour le point courant A'($\phi_{s\alpha c}$, $\phi_{s\beta c}$, $\Gamma_c$), le temps restant $dt_{ir}$ d'application de l'état $V_i$ et les temps $dt_{adj}$ et $dt_0$ mis à jour des états futurs $V_{adj}$ et $V_0$,

d) lorsque $dt_{ir} \leq T_e$, le calculateur prévoit l'instant de commutation de l'état $V_i$ vers l'état $V_{adj}$,

e) de façon asynchrone avec les instants d'échantillonnage et de calcul, lorsque l'instant de commutation arrive, le calculateur envoi des signaux de commande des SPmLL pour commuter dans l'état $V_{adj}$,

f) à chaque échantillonnage, le calculateur calcule, pour le point courant B'($\phi_{s\alpha c}$, $\phi_{s\beta c}$, $\Gamma_c$), le temps restant $dt_{adjr}$ d'application de l'état $V_{adj}$ et le temps $dt_0$ mis à jour de l'état futur $V_0$,

g) lorsque $dt_{adjr} \leq T_e$, le calculateur prévoit l'instant de commutation de l'état $V_{adj}$ vers l'état $V_0$,

h) de façon asynchrone avec les instants d'échantillonnage et de calcul, lorsque l'instant de commutation arrive, le calculateur envoi des signaux de commande des SPmLL pour commuter dans l'état $V_0$,

i) à chaque échantillonnage, le calculateur calcule pour le point courant $C'(\phi_{s\alpha c}, \phi_{s\beta c}, \Gamma_c)$ le temps restant $dt_{0r}$ d'application de l'état $V_0$,

j) lorsque $dt_{0r} \leq T_e$, le calculateur recherche une nouvelle triplette unique $(V'_0, V'_i, V'_{adj})$ $i \in \{2 ... m^n-1\}$, et, prévoit l'instant de commutation de l'état $V_0$ vers l'état $V'_i$,

k) de façon asynchrone avec les instants d'échantillonnage et de calcul, lorsque l'instant de commutation arrive, le calculateur envoi des signaux de commande des SPmLL pour commuter dans l'état $V'_i$,

le calculateur traitant la nouvelle triplette $(V'_0, V'_i, V'_{adj})$ selon les étapes c) à k).

Lors de l'étape c), le calculateur résout le système suivant :

$$
\begin{vmatrix}
\dot{\phi}_{s\alpha}(V_i) & \dot{\phi}_{s\alpha}(V_{adj}) & \dot{\phi}_{s\alpha}(V_0) & \phi_{s\beta}(D') \\
\dot{\phi}_{s\beta}(V_i) & \dot{\phi}_{s\beta}(V_{adj}) & \dot{\phi}_{s\beta}(V_0) & -\dot{\phi}_{s\alpha}(D') \\
\dot{\Gamma}(V_i) & \dot{\Gamma}(V_{adj}) & \dot{\Gamma}(V_0) & 0 \\
1 & 1 & 1 & 0
\end{vmatrix}
\begin{vmatrix}
dt_{ir} \\
dt_{adj} \\
dt_0 \\
\lambda
\end{vmatrix}
=
\begin{vmatrix}
\phi_{s\alpha}(D) - \phi_{s\alpha}(A') \\
\phi_{s\beta}(D) - \phi_{s\beta}(A') \\
\Gamma(D) - \Gamma(A') \\
\tfrac{1}{2}T_d - t_c
\end{vmatrix}
$$

où $\lambda$, est un paramètre définissant la position du point D sur une tangente au cercle $\eta_{cal}$ en D'.

Lors de l'étape f), le calculateur résout le système suivant par la méthode des moindres carrés:

$$
\begin{vmatrix}
\dot{\phi}_{s\alpha}(V_{adj}) & \dot{\phi}_{s\alpha}(V_0) & \phi_{s\beta}(D') \\
\dot{\phi}_{s\beta}(V_{adj}) & \dot{\phi}_{s\beta}(V_0) & -\phi_{s\alpha}(D') \\
\dot{\Gamma}(V_{adj}) & \dot{\Gamma}(V_0) & 0 \\
1 & 1 & 0
\end{vmatrix}
\begin{vmatrix}
dt_{adjr} \\
dt_0 \\
\lambda
\end{vmatrix}
=
\begin{vmatrix}
\phi_{s\alpha}(D) - \phi_{s\alpha}(B') \\
\phi_{s\beta}(D) - \phi_{s\beta}(B') \\
\Gamma(D) - \Gamma(B') \\
\tfrac{1}{2}T_d - t_c
\end{vmatrix}
$$

Lors de l'étape i)

le calculateur calcule pour le point courant $C'(\phi_{s\alpha c}, \phi_{s\beta c}, \Gamma_c)$ le temps restant $dt_{0r}$ d'application de l'état $V_0$ en résolvant par la méthode des moindres carrés le système suivant :

$$
\begin{vmatrix}
\dot{\Gamma}(V_0) \\
1
\end{vmatrix}
\begin{vmatrix}
dt_{0r}
\end{vmatrix}
=
\begin{vmatrix}
\Gamma(D) - \Gamma(C') \\
\tfrac{1}{2}T_d - t_c
\end{vmatrix}
$$

Lors de l'étape d) le calculateur peut prévoir la commutation de l'état $V_i$ vers l'autre état adjacent de $V_i$ afin de recadrer la trajectoire du point B' vers le cercle $\eta_{cal}$.

Lorsqu'il n'existe pas de triplette unique $(V_0, V_i, V_{adj})$, alors le calculateur recherche une succession de deux états $(V_i, V_{adj})$ différents d'un état nul permettant de rapprocher au mieux le point A $(\phi_{s\alpha}, \phi_{s\beta}, \Gamma)$ du cercle $\eta_{ref}$ dans l'intervalle de temps $\tfrac{1}{2}T_d$.

Dans un autre mode de fonctionnement, le calculateur effectuant les calculs dans un référentiel de calcul tridimensionnel orthogonal comprenant le plan statorique $(\phi_{s\alpha}, \phi_{s\beta})$ du flux stator $\phi_S$ et un axe, perpendiculaire audit plan statorique $(\phi_{s\alpha}, \phi_{s\beta})$, représentant le couple $\Gamma$, les consignes $\Gamma_{ref}$, $|\phi_S|_{ref}$ étant représentées par un cercle $\eta_{ref}$ contenu dans un plan parallèle au plan statorique $(\phi_{s\alpha}, \phi_{s\beta})$, centré sur ledit axe perpendiculaire, ayant un rayon de $|\phi_S|_{ref}$ et interceptant ledit axe perpendiculaire en $\Gamma_{ref}$, les valeurs $\Gamma$, $\phi_S$ fournies par la machine tournante, étant représentées par un point A $(\phi_{s\alpha}, \phi_{s\beta}, \Gamma)$ sur un cercle $\eta$ contenu dans un plan parallèle au plan statorique $(\phi_{s\alpha}, \phi_{s\beta})$, centré sur ledit axe perpendiculaire, ayant un rayon de $|\phi_S|$ et interceptant ledit axe perpendiculaire en $\Gamma$, la stratégie de contrôle est une stratégie synchrone avec la fréquence de rotation de la machine tournante dans laquelle la succession de n états du vecteur tension est calculée pour que le point A $(\phi_{s\alpha}, \phi_{s\beta}, \Gamma)$ rallie un point D d'un cercle $\eta_{cal}$, centré sur ledit axe perpendiculaire, ayant un rayon de $|\phi_S|_{cal}$ et interceptant ledit axe perpendiculaire en $\Gamma_{cal}$, par application successive des n états, avec une position finale prédéterminée du vecteur flux statorique dans le plan stator $(\phi_{s\alpha}, \phi_{s\beta})$, ledit calculateur calculant l'équation du cercle $\eta_{cal}$ pour que sur la durée d'application de la succession, le couple $\Gamma$ moyen et le flux statorique $|\phi_S|$ moyen générés soient sensiblement égaux respectivement aux consignes $\Gamma_{ref}$, $|\phi_S|_{ref}$.

Le nombre de position prédéterminées autorisées par tour de flux statorique est fini et fonction d'une plage de vitesse de rotation de la machine tournante.

En particulier, n étant égal à trois, la stratégie de contrôle est telle que le calculateur connaît une triplette unique d'états $(V_0, V_i, V_{adj})$ $i \in \{2...m^n-1\}$ du vecteur tension constituant une succession de trois états, comprenant un état de départ $V_i$, un des deux états $V_{adj}$ adjacent à $V_i$ et un état nul $(V_0)$, dont les temps d'application respectifs $dt_i$, $dt_{adj}$, $dt_0$ sont positifs, ladite triplette permettant de rejoindre le cercle $\eta_{cal}$ en un point D connu.

De ce fait les étapes du procédé sont :

dans une étape d'initialisation de la machine tournante, on met en mémoire dans le calculateur des triplettes $(V_0, V_i, V_{adj})$ $i \in \{2... m^n-1\}$, pour passer d'une position prédéterminée à une autre position prédéterminée du vecteur flux stator, selon divers plages de vitesse de rotation de la machine tournante, et en fonctionnement,

a) le calculateur connaît la triplette $(V_0, V_i, V_{adj})$ à appliquer en fonction de la vitesse de rotation de la machine tournante et de la position prédéterminé dans laquelle est le vecteur flux stator,

b) il envoi des signaux de commande des SPmLL pour commuter dans l'état $V_i$,

c) à chaque échantillonnage, le calculateur calcule, pour le point courant $A'(\phi_{s\alpha c}, \phi_{s\beta c}, \Gamma_c)$, le temps restant $dt_{ir}$ d'application de l'état $V_i$ et les temps $dt_{adj}$ et $dt_0$ mis à jour des états futurs $V_{adj}$ et $V_0$,

d) lorsque $dt_{ir} \leq T_e$, le calculateur prévoit l'instant de commutation de l'état $V_i$ vers l'état $V_{adj}$,

e) de façon asynchrone avec les instants d'échantillonnage et de calcul, lorsque l'instant de commutation arrive, le calculateur envoi des signaux de commande des SPmLL pour commuter dans l'état $V_{adj}$,

f) à chaque échantillonnage, le calculateur calcule, pour le point courant $B'(\phi_{s\alpha c}, \phi_{s\beta c}, \Gamma_c)$, le temps restant $dt_{adjr}$ d'application de l'état $V_{adj}$ et le temps $dt_0$ mis à jour de l'état futur $V_0$,

g) lorsque $dt_{adjr} \leq T_e$, le calculateur prévoit l'instant de commutation de l'état $V_{adj}$ vers l'état $V_0$,

h) de façon asynchrone avec les instants d'échantillonnage et de calcul, lorsque l'instant de commutation arrive, le calculateur envoi des signaux de commande des SPmLL pour commuter dans l'état $V_0$,

i) à chaque échantillonnage, le calculateur calcule pour le point courant $C'(\phi_{s\alpha c}, \phi_{s\beta c}, \Gamma_c)$ le temps restant $dt_{0r}$ d'application de l'état $V_0$,

j) lorsque $dt_{0r} \leq T_e$, prévoit l'instant de commutation de l'état $V_0$ vers l'état $V'_i$, en outre le calculateur connaît la nouvelle triplette unique $(V'_0, V'_i, V'_{adj})$ permettant de passer de la position prédéterminée qui va être atteinte à la position prédéterminée suivante du vecteur flux stator, et

k) de façon asynchrone avec les instants d'échantillonnage et de calcul, lorsque l'instant de commutation arrive, le calculateur envoi des signaux de commande des SPmLL pour commuter dans l'état $V'_i$,

le calculateur traitant la nouvelle triplette $(V'_0, V'_i, V'_{adj})$ selon les étapes c) à k).

Lors de l'étape c), le calculateur résout le système suivant :

$$\begin{vmatrix} \overset{\circ}{\phi}_{s\alpha}(V_i) & \overset{\circ}{\phi}_{s\alpha}(V_{adj}) & \overset{\circ}{\phi}_{s\alpha}(V_0) \\ \overset{\circ}{\phi}_{s\beta}(V_i) & \overset{\circ}{\phi}_{s\beta}(V_{adj}) & \overset{\circ}{\phi}_{s\beta}(V_0) \\ \overset{\circ}{\Gamma}(V_i) & \overset{\circ}{\Gamma}(V_{adj}) & \overset{\circ}{\Gamma}(V_0) \end{vmatrix} \begin{vmatrix} dt_{ir} \\ dt_{adj} \\ dt_0 \end{vmatrix} = \begin{vmatrix} \phi_{s\alpha}(D) - \phi_{s\alpha}(A') \\ \phi_{s\beta}(D) - \phi_{s\beta}(A') \\ \Gamma(D) - \Gamma(A') \end{vmatrix}$$

Lors de l'étape f), le calculateur résout le système suivant :

$$
\begin{vmatrix}
\overset{o}{\phi}_{s\alpha}(V_{adj}) & \overset{o}{\phi}_{s\alpha}(V_0) & \phi_{s\beta}(D) \\
\overset{o}{\phi}_{s\beta}(V_{adj}) & \overset{o}{\phi}_{s\beta}(V_0) & -\phi_{s\alpha}(D) \\
\overset{o}{\Gamma}(V_{adj}) & \overset{o}{\Gamma}(V_0) & 0
\end{vmatrix}
\begin{vmatrix}
dt_{adjr} \\
dt_0 \\
\lambda
\end{vmatrix}
=
\begin{vmatrix}
-\phi_{s\alpha}(B') \\
-\phi_{s\beta}(B') \\
\Gamma(D)-\Gamma(B')
\end{vmatrix}
$$

où $\lambda$ est un paramètre définissant la position finale prévisible du point courant B' sur une droite contenue dans le plan statorique, passant par l'axe de couple et parallèle à la position prédéterminée du vecteur de flux statorique qui doit être atteinte.

Lors de l'étape i)

le calculateur calcule pour le point courant $C'(\phi_{s\alpha c}, \phi_{s\beta c}, \Gamma_c)$ le temps restant $dt_{0r}$ d'application de l'état $V_0$ en résolvant le système suivant :

$$\Gamma(D) = \Gamma(A) + [\Gamma_{ref} - \Gamma_{moyen}]$$

$$dt_{0r} = \frac{\Gamma(D) - \Gamma(t_c)}{\overset{o}{\Gamma}(V_0)}$$

où $\Gamma_{moyen}$ est le couple électromagnétique moyen calculé sur l'intervalle de temps $dt_i + dt_{adj}$.

Le passage en pleine onde résulte du fait que le temps $dt_0$ d'application de l'état nul est une fonction décroissante de la vitesse de rotation de la machine tournante, et est égal à zéro au-delà d'une valeur prédéterminée de la vitesse de rotation de la machine tournante.

L'invention concerne aussi un système d'asservissement pour mettre en oeuvre le procédé décrit ci-dessus.

L'invention concerne enfin une machine tournante pourvue d'un tel système d'asservissement.

Un premier avantage de la présente invention résulte de la désynchronisation des instants d'échantillonnage et de calcul des instants de commutation. cela permet une augmentation sensible de la période d'échantillonnage et donc notamment d'appliquer le procédé avec des dispositifs d'échantillonnage standard.

Un autre avantage de la présente invention résulte du fait de la présence explicite de la notion de temps qui permet de prendre en compte de façon fiable les contraintes de fréquences de découpage et de temps minimum de conduction inhérentes aux convertisseurs de puissance.

Un autre avantage de la présente invention est une dynamique de couple optimale même à basse vitesse.

D'autres avantages et caractéristiques de la présente invention résulteront de la description qui va suivre en référence aux dessins annexés dans lesquels :

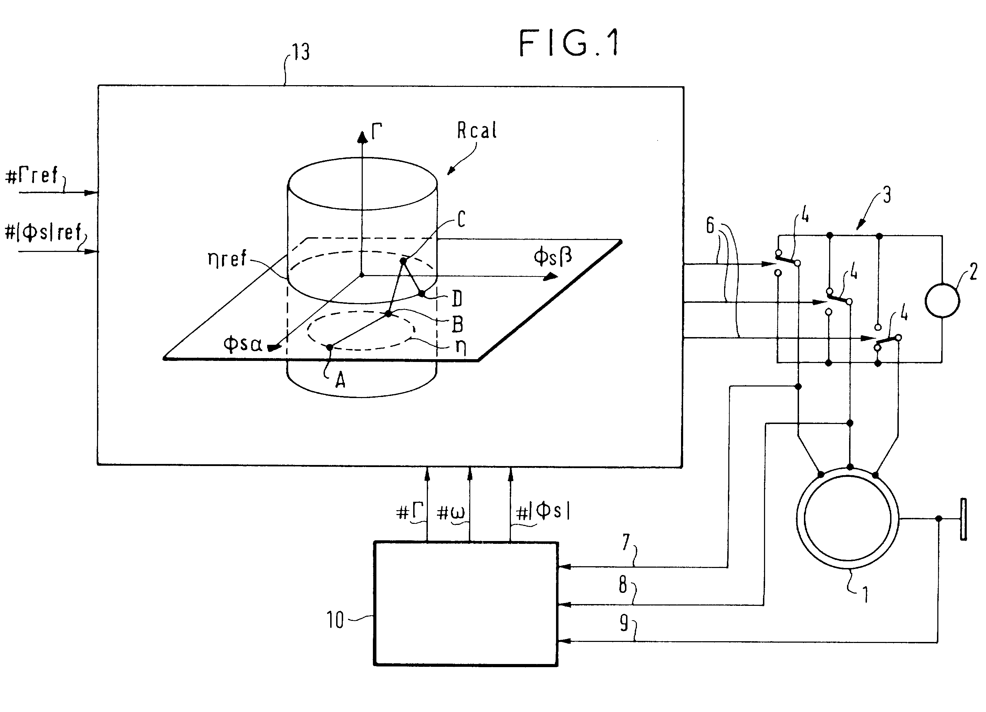

- la figure 1 est une représentation schématique d'un dispositif selon l'invention.
- les figures 2 et 3 sont des illustrations schématiques d'un exemple de calcul dans le mode asynchrone selon l'invention.
- les figures 4 et 5 sont des illustrations schématiques d'un exemple de calcul dans le mode synchrone selon l'invention.
- la figure 6 est une représentation schématique d'un exemple de correction en mode pleine onde selon l'invention.

L'invention concerne un procédé de régulation d'une machine tournante 1 à n phases alimentée en courant alternatif par l'intermédiaire d'un onduleur de tension 3 comprenant n interrupteurs 4 à m positions (SPmLL : Single Pole m Logic Levels / pôle unique à m niveaux logiques). définissant $m^n$ états $V_i$ $i \in \{1,..,m^n\}$ du vecteur tension de phase stator $V_S$.

La machine 1 est asservie en couple électromagnétique $\Gamma$ et en flux statorique $|\phi_S|$ à des consignes $\Gamma_{ref}$, $|\phi_S|_{ref}$ par un système d'asservissement 5 pouvant suivre différentes stratégies de contrôle, chaque stratégie ayant des conditions d'application.

Le système d'asservissement 5 comprend un ensemble de capteurs 7, 8, 9 dont les valeurs captées sont transmises à un observateur-échantillonneur 10.

Les sorties de l'observateur 10, échantillonnées selon une période d'échantillonnage donnée $T_e$, sont injectées

dans un calculateur 13.

Le calculateur 13 restituant en sortie des signaux de commande 6 des SPmLL 4 de l'onduleur de tension 3.

Les sorties de l'observateur 10 sont des valeurs représentatives du couple $\Gamma$ et du flux statorique $|\phi_S|$.

Outre les sorties échantillonnées, le calculateur reçoit aussi en entrée les valeurs représentatives des consignes $\Gamma_{ref}$ et $|\phi_S|_{ref}$.

L'invention concerne plus exactement les étapes de procédé se déroulant dans le calculateur 13.

le calculateur 13 calcule, en fonction des conditions d'application de la stratégie de contrôle utilisée, d'une part une succession de n états du vecteur tension de phase $V_S$ pour rapprocher le couple $\Gamma$ et le flux $|\phi_S|$ des consignes $\Gamma_{ref}$, $|\phi_S|_{ref}$, par commutation successive des n états de la succession, et d'autre part le temps d'application $dt_k$ k $\in \{1,..,n\}$ de chacun des n états de la succession,

à chaque échantillonnage, le calculateur calcule le temps d'application restant de l'état en cours et les temps d'application mis à jour des états futurs du vecteur de phase, et

de façon asynchrone avec les instants d'échantillonnage et de calcul, à la fin du temps d'application de l'état en cours, le calculateur envoi des signaux de commande 6 des SPmLL 4 pour commuter de l'état en cours vers l'état suivant.

Le procédé, ci-dessus décrit, permet donc de prédire, par le calcul, les instants de commutation à venir et de réaliser les commutations aux instants calculés indépendamment des instants d'échantillonnage ou de calcul.

Avantageusement, dans l'exemple de réalisation décrit, mais de façon non limitative, le calculateur effectue les calculs dans un référentiel de calcul tridimensionnel orthogonal comprenant le plan statorique ($\phi_{s\alpha}$, $\phi_{s\beta}$) du flux stator $\phi_S$ et un axe, perpendiculaire au plan statorique ($\phi_{s\alpha}$, $\phi s\beta$), représentant le couple $\Gamma$.

Dans cet espace de calcul, les consignes $\Gamma_{ref}$, $|\phi_S|_{ref}$ sont représentées par un cercle $\eta_{ref}$ contenu dans un plan parallèle au plan statorique ($\phi_{s\alpha}$, $\phi_{s\beta}$), centré sur l'axe perpendiculaire, ayant un rayon de $|\phi_S|_{ref}$ et interceptant ledit axe perpendiculaire en $\Gamma_{ref}$.

De même les valeurs $\Gamma$, $\phi_S$ courantes fournies par la machine tournante, sont représentées par un point A ($\phi_{s\alpha c}$, $\phi_{s\beta c}$, $\Gamma_c$) sur un cercle $\eta$ contenu dans un plan parallèle au plan statorique ($\phi_{s\alpha}$, $\phi_{s\beta}$), centré sur ledit axe perpendiculaire, ayant un rayon de $|\phi_{Sc}|$ et interceptant ledit axe perpendiculaire en $\Gamma_c$.

Enfin, les stratégies de contrôle du procédé sont des stratégies dans lesquelles la succession de n états du vecteur tension est calculée pour que le point A ($\phi_{s\alpha}$, $\phi_{s\beta}$, $\Gamma$) rallie un point D quelconque d'un cercle $\eta_{cal}$, centré sur ledit axe perpendiculaire, ayant un rayon de $|\phi_S|_{cal}$ et interceptant ledit axe perpendiculaire en $\Gamma_{cal}$ par application successive des n états.

A cet effet le calculateur calcule l'équation du cercle $\eta_{cal}$ pour que sur la durée d'application de la succession de n états, le couple $\Gamma$ moyen et le flux statorique $|\phi_S|$ moyen générés soient sensiblement égaux respectivement aux consignes $\Gamma_{ref}$, $|\phi_S|_{ref}$.

Dans l'exemple de réalisation décrit, afin de simplifier l'illustration du procédé, la machine tournante est une machine triphasée, et l'onduleur comprend des SP2LL. Cependant le procédé peut être appliqué avec une machine à n phases et des SPmLL.

Dans l'exemple de réalisation décrit, il y a donc huit états possibles ($V_1,..,V_8$) du vecteur de phase $V_S$ dont deux à amplitude nulle ($V_1$, $V_8$). Le procédé applique donc une triplette d'états pour rejoindre les consignes.

Avantageusement, et dans la mesure où elle existe, le procédé appliquera une triplette ($V_0$, $V_i$, $V_{adj}$) i$\in\{2...m^n-1\}$ constituée d'une succession de trois états, comprenant un état de départ $V_i$, un des deux états $V_{adj}$ adjacent à $V_i$ et un état nul $V_0$.

Le procédé doit donc définir les temps d'application respectifs $dt_i$, $dt_{adj}$, $dt_0$ de la triplette. Le réglage de ces trois durées autorise trois degrés de liberté. Or le contrôle selon lequel en fin d'application de la triplette le couple et le flux statorique doivent se retrouver sur $\eta_{cal}$ ne contraint que deux degrés de liberté. Il doit donc être appliqué une contrainte supplémentaire pour pouvoir déterminer les trois temps d'application.

Le procédé selon l'invention propose deux contraintes supplémentaires déterminant chacune une stratégie de contrôle différente:

La stratégie de contrôle dite asynchrone dans laquelle la contrainte supplémentaire est une contrainte de temps à respecter en fin d'application de la triplette, indépendante du positionnement du vecteur tournant flux statorique.

La stratégie de contrôle dite synchrone dans laquelle la contrainte supplémentaire est une contrainte imposant une position du vecteur tournant flux statorique en fin d'application de la triplette indépendamment du temps écoulé pour l'application de la triplette.

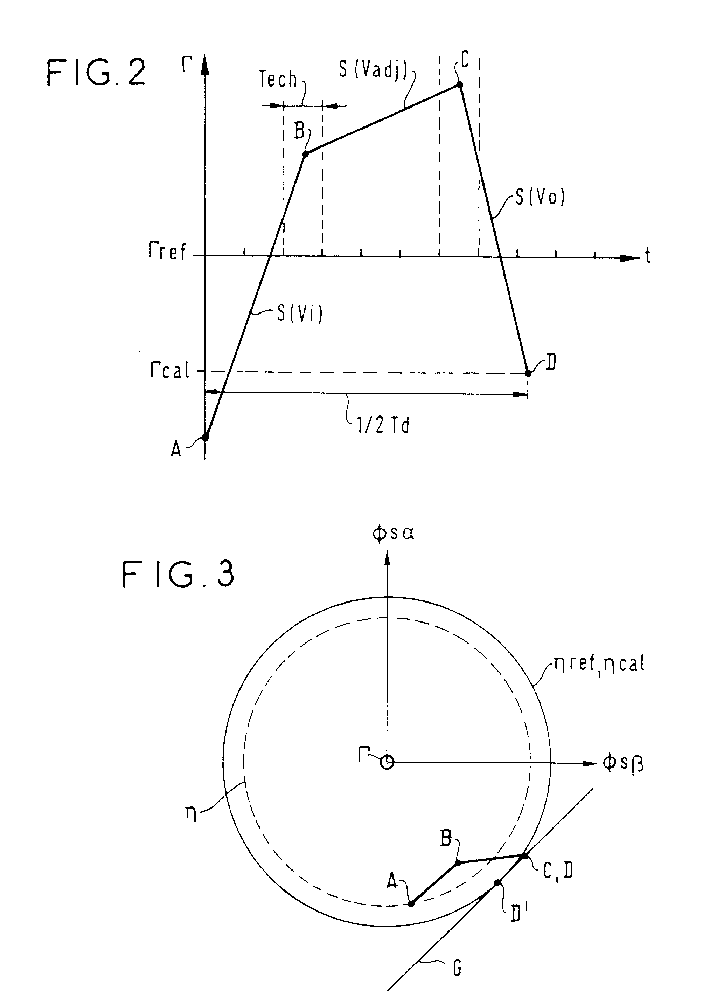

Dans le cas de la stratégie asynchrone (figures 2, 3) :

la stratégie de contrôle est basée sur l'application d'un cycle tel que le calculateur recherche l'existence d'une triplette unique d'états ($V_0$, $V_i$, $V_{adj}$) i$\in\{2...m^n-1\}$ du vecteur tension constituant une succession de trois états, comprenant un état de départ $V_i$, un des deux états $V_{adj}$ adjacent à $V_i$ et un état nul $V_0$, dont les temps d'application respectifs

$dt_i$, $dt_{adj}$, $dt_0$ sont positifs et tels que leur somme soit égale à la moitié de la période de découpage $T_d$ de l'onduleur.

$$dt_i + dt_{adj} + dt_0 = \tfrac{1}{2} T_d$$

L'unicité de la triplette ne signifie pas son existence. Dans le cas où le calculateur ne peut trouver la triplette ayant trois durées d'application positives, le procédé lance une troisième stratégie de contrôle dite grands transitoires qui sera décrite plus tard.

Dans le cas de la stratégie de contrôle asynchrone:

a) le calculateur cherche la triplette unique ($V_0$, $V_i$, $V_{adj}$) $i\in\{2...m^n\text{-}1\}$, et, calcule un point d'arrivée présumé D' sur le cercle $\eta_{cal}$.

b) il envoi des signaux de commande des SPmLL pour commuter dans l'état $V_i$,

c) à chaque échantillonnage, le calculateur calcule, pour le point courant A'($\phi_{s\alpha c}$, $\phi_{s\beta c}$, $\Gamma_c$), le temps restant $dt_{ir}$ d'application de l'état $V_i$ et les temps $dt_{adj}$ et $dt_0$ mis à jour des états futurs $V_{adj}$ et $V_0$,

d) lorsque $dt_{ir}{\leq}T_e$, le calculateur prévoit l'instant de commutation de l'état $V_i$ vers l'état $V_{adj}$,

e) de façon asynchrone avec les instants d'échantillonnage et de calcul, lorsque l'instant de commutation arrive, le calculateur envoi des signaux de commande des SPmLL pour commuter dans l'état $V_{adj}$,

f) à chaque échantillonnage, le calculateur calcule, pour le point courant B'($\phi_{s\alpha c}$, $\phi_{s\beta c}$, $\Gamma_c$), le temps restant $dt_{adjr}$ d'application de l'état $V_{adj}$ et le temps $dt_0$ mis à jour de l'état futur $V_0$,

g) lorsque $dt_{adjr}{\leq}T_e$, le calculateur prévoit l'instant de commutation de l'état $V_{adj}$ vers l'état $V_0$,

h) de façon asynchrone avec les instants d'échantillonnage et de calcul, lorsque l'instant de commutation arrive, le calculateur envoi des signaux de commande des SPmLL pour commuter dans l'état $V_0$,

i) à chaque échantillonnage, le calculateur calcule pour le point courant C'($\phi_{s\alpha c}$, $\phi_{s\beta c}$, $\Gamma_c$) le temps restant $dt_{0r}$ d'application de l'état $V_0$,

j) lorsque $dt_{0r}{\leq}T_e$, le calculateur recherche une nouvelle triplette unique ($V'_0$, $V'_i$, $V'_{adj}$) $i\in\{2...m^n\text{-}1\}$, et, prévoit l'instant de commutation de l'état $V_0$ vers $V'_i$,

k) de façon asynchrone avec les instants d'échantillonnage et de calcul, lorsque l'instant de commutation arrive, le calculateur envoi des signaux de commande des SPmLL pour commuter dans l'état $V'_i$,

le calculateur traitant la nouvelle triplette ($V'_0$, $V'_i$, $V'_{adj}$) selon les étapes c) à k).

Dans un exemple de calcul selon le procédé de l'invention (figures 2, 3), sur le segment AB l'état $V_i$ est appliqué. A chaque instant d'échantillonnage (étape c)), le calculateur calcule pour le point A' courant les temps d'applications en résolvant le système de trois équations à trois inconnues

$$\left| \begin{array}{l} dt_i \;+\; dt_{adj} \;+\; dt_0 \;=\; \tfrac{1}{2}\, T_d - t_c \\[4pt] \Gamma(t_f = \tfrac{1}{2}\, T_d) \;=\; \Gamma_{ref} \\[4pt] \phi_S{}^2(\; t_f = \tfrac{1}{2}\, T_d) \;=\; \phi_S{}^2{}_{ref} \end{array} \right.$$

le système de trois équations à trois inconnues ci-dessus est linéarisé en remplaçant le point d'arrivée présumée D' par un plan G tangent en D' au cercle $\eta_{cal}$.

Le système ci-dessus linéarisé revient à résoudre le système ci-dessous :

$$\begin{vmatrix} \overset{\circ}{\phi}_{s\alpha}(V_i) & \overset{\circ}{\phi}_{s\alpha}(V_{adj}) & \overset{\circ}{\phi}_{s\alpha}(V_0) & \phi_{s\beta}(D') \\[4pt] \overset{\circ}{\phi}_{s\beta}(V_i) & \overset{\circ}{\phi}_{s\beta}(V_{adj}) & \overset{\circ}{\phi}_{s\beta}(V_0) & -\phi_{s\alpha}(D') \\[4pt] \overset{\circ}{\Gamma}(V_i) & \overset{\circ}{\Gamma}(V_{adj}) & \overset{\circ}{\Gamma}(V_0) & 0 \\[4pt] 1 & 1 & 1 & 0 \end{vmatrix} \begin{vmatrix} dt_{ir} \\[4pt] dt_{adj} \\[4pt] dt_0 \\[4pt] \lambda \end{vmatrix} = \begin{vmatrix} \phi_{s\alpha}(D) - \phi_{s\alpha}(A') \\[4pt] \phi_{s\beta}(D) - \phi_{s\beta}(A') \\[4pt] \Gamma(D) - \Gamma(A') \\[4pt] \tfrac{1}{2}T_d - t_c \end{vmatrix} \qquad (SA1)$$

où $\lambda$ est un paramètre définissant la position du point D sur une tangente au cercle $\eta_{cal}$ en D' tel que

$$
\begin{vmatrix} \phi_{s\alpha}(D) \\ \phi_{s\beta}(D) \\ \Gamma(D) \end{vmatrix} = \begin{vmatrix} \phi_{s\alpha}(D') \\ \phi_{s\beta}(D') \\ \Gamma(D') \end{vmatrix} + \lambda \cdot \begin{vmatrix} -\phi_{s\beta}(D') \\ \phi_{s\alpha}(D') \\ 0 \end{vmatrix}
$$

D n'étant pas imposé
et où

$$
\overset{\circ}{S} = \begin{vmatrix} \overset{\circ}{\phi}_{s\alpha}(V_{indice}) \\ \overset{\circ}{\phi}_{s\beta}(V_{indice}) \\ \overset{\circ}{\Gamma}(V_{indice}) \end{vmatrix} \quad \text{est la dérivée directionnelle de } S = \begin{vmatrix} \phi_{s\alpha}(V_{indice}) \\ \phi_{s\beta}(V_{indice}) \\ \Gamma(V_{indice}) \end{vmatrix}
$$

suivant l'état $V_{indice}$ du vecteur de phase stator $V_S$

on comprend que pour le calcul des dérivées directionnelles, le modèle de la machine tournante devra avoir été préalablement introduit dans le calculateur.

(SA1) permet donc à chaque instant d'échantillonnage sur le segment AB de fournir les trois durée d'application $dt_i$, $dt_{adj}$, $dt_0$.

Lorsque $V_{adj}$ est appliqué (segment BC), la perte du degré de liberté lié a $V_i$ amène le procédé à réduire ses ambitions sur la précision en fin de triplette. En effet, la résolution du système (SA1) avec $dt_i = 0$ ne fournit pas de solution exacte. Le calculateur adopte une solution approchée qui minimise l'erreur. Par exemple le calculateur utilise la méthode des moindres carrés.

le calculateur résout le système suivant par la méthode des moindres carrés (étape f)) :

$$
\begin{vmatrix} \overset{\circ}{\phi}_{s\alpha}(V_{adj}) & \overset{\circ}{\phi}_{s\alpha}(V_0) & \phi_{s\beta}(D') \\ \overset{\circ}{\phi}_{s\beta}(V_{adj}) & \overset{\circ}{\phi}_{s\beta}(V_0) & -\phi_{s\alpha}(D') \\ \overset{\circ}{\Gamma}(V_{adj}) & \overset{\circ}{\Gamma}(V_0) & 0 \\ 1 & 1 & 0 \end{vmatrix} \begin{vmatrix} dt_{adjr} \\ dt_0 \\ \lambda \end{vmatrix} = \begin{vmatrix} \phi_{s\alpha}(D) - \phi_{s\alpha}(B') \\ \phi_{s\beta}(D) - \phi_{s\beta}(B') \\ \Gamma(D) - \Gamma(B') \\ \frac{1}{2}T_d - t_c \end{vmatrix} \quad (SA2)
$$

(SA2) fournit les durées d'application $dt_{adjr}$ et $dt_0$.

Lorsque $V_0$ est appliqué (segment CD), la perte du degré de liberté lié a Vadj amène le procédé à réduire ses ambitions sur la précision en fin de triplette.

En fin d'application de la triplette il y aura donc une double imprécision sur la durée d'application de la triplette et sur la valeur du couple en fin de triplette. En effet, la résolution du système (SA2) avec $dt_{adj} = 0$ ne fournit pas de solution exacte. Le calculateur adopte une solution approchée qui minimise l'erreur. Par exemple le calculateur utilise la méthode des moindres carrés.

le calculateur résout le système suivant par la méthode des moindres carrés (étape i)):
résolvant par la méthode des moindres carrés le système suivant :

$$
\begin{vmatrix} \overset{\circ}{\Gamma}(V_0) \\ 1 \end{vmatrix} \begin{vmatrix} dt_{0r} \end{vmatrix} = \begin{vmatrix} \Gamma(D) - \Gamma(C') \\ \frac{1}{2}T_d - t_c \end{vmatrix} \quad (SA3)
$$

(SA3) permet le calcul de $dt_{0r}$.

Lors de l'étape d) le calculateur peut prévoir la commutation de l'état $V_i$ vers l'autre état adjacent de $V_i$ afin de recadrer la trajectoire du point B' vers le cercle $\eta_{ref}$. Cela peut être nécessaire lorsque durant l'écoulement de $dt_i$, les consignes ont été sensiblement modifiées. De ce fait, le calculateur peut déterminer que l'application de l'autre état adjacent à $V_i$ est plus optimale. L'autre état adjacent à $V_i$ sera alors appliqué pendant le temps $dt_{adj}$ prévu.

Sur la représentation de la figure 3, les cercles $\eta_{cal}$, $\eta_{ref}$ ont le même rayon. Le calculateur pourrait néanmoins déterminer des cercles ayant un rayon différent.

lorsqu'il n'existe pas de triplette unique ($V_0$, $V_i$, $V_{adj}$) avec $dt_i$, $dt_{adj}$, $dt_0$ positifs, alors le calculateur bascule en stratégie de contrôle dite "grands transitoires".

Le calculateur recherche une succession de deux états adjacents ($V_i$, $V_{adj}$) différents d'un état nul permettant de rapprocher au mieux le point A ($\phi_{s\alpha}$, $\phi_{s\beta}$, $\Gamma$) du cercle $\eta_{ref}$ dans l'intervalle de temps ½$T_d$.

Le calculateur pourra, par exemple illustratif, chercher la paire d'états adjacents qui minimise l'erreur :

$$\varepsilon = \chi \cdot \varepsilon_\phi + (1-\chi) \cdot \varepsilon_\Gamma$$

cette erreur permet de tenir compte de façon pondérée des erreurs sur le flux statorique et sur le couple.

En outre le fait d'astreindre $dt_i + dt_{adj} = ½\,T_d$ permet de garantir des ondulations raisonnables pour les grandeurs caractéristiques du procédé.

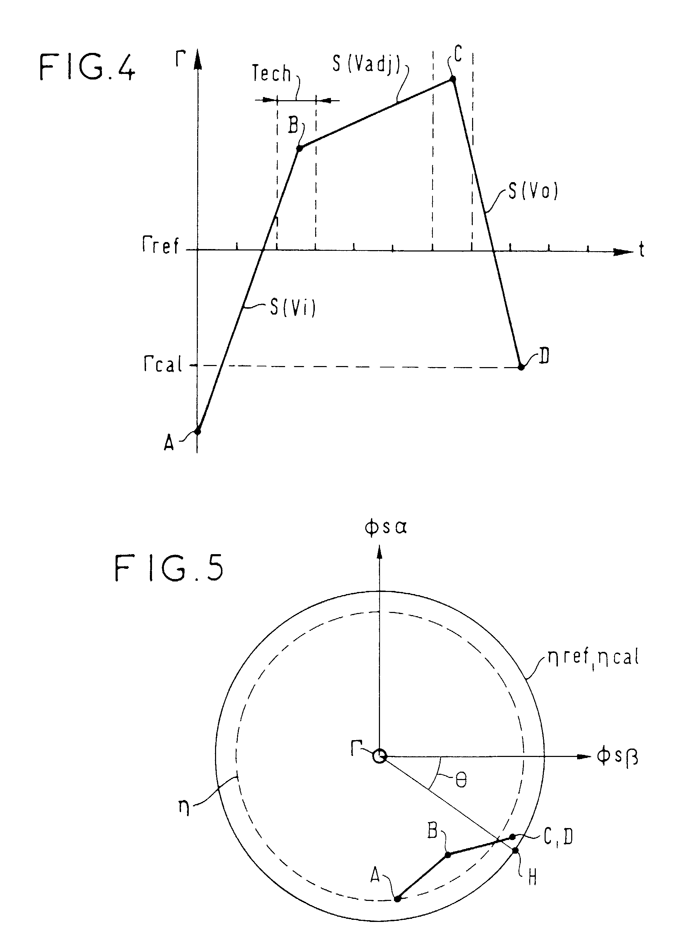

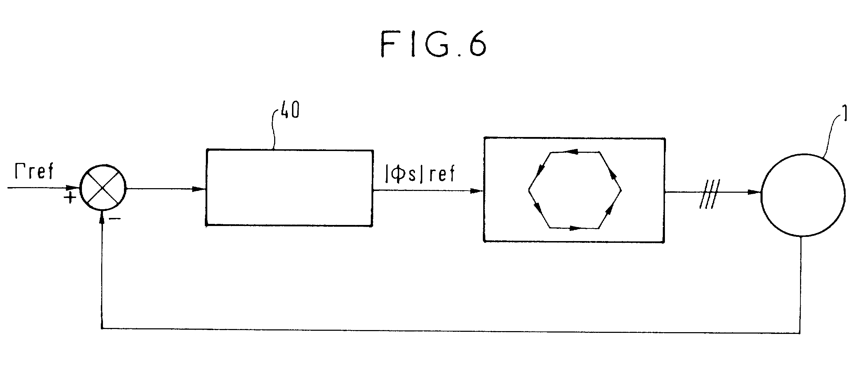

Dans le cas de la stratégie synchrone (figures 4, 5): la succession des n états du vecteur tension est calculée pour que le point A ($\phi_{s\alpha}$, $\phi_{s\beta}$, $\Gamma$) rallie un point D du cercle $\eta_{cal}$, par application successive des n états, et avec une position prédéterminée du vecteur flux statorique dans le plan stator ($\phi_{s\alpha}$, $\phi_{s\beta}$).

Le nombre de position prédéterminées autorisées par tour de flux statorique est fini et fonction d'une plage de vitesse de rotation de la machine tournante.

Dans le cas d'une machine tournante triphasée avec onduleur à SP2LL, la stratégie de contrôle est telle que le calculateur connaît une triplette unique d'états ($V_0$, $V_i$, $V_{adj}$) $i \in \{2...m^n-1\}$ du vecteur tension constituant une succession de trois états, comprenant un état de départ $V_i$, un des deux états $V_{adj}$ adjacent à $V_i$ et un état nul ($V_0$), dont les temps d'application respectifs $dt_i$, $dt_{adj}$, $dt_0$ sont positifs, la triplette permettant de rejoindre le cercle $\eta_{cal}$ en un point D voulu.

Selon le procédé :

dans une étape d'initialisation de la machine tournante, on met en mémoire dans le calculateur des triplettes ($V_0$, $V_i$, $V_{adj}$) $i \in \{2...m^n-1\}$, pour passer d'une position prédéterminée à une autre position prédéterminée du vecteur flux stator, selon divers plages de vitesse de rotation de la machine tournante, et
en fonctionnement,

a) le calculateur connaît la triplette ($V_0$, $V_i$, $V_{adj}$) à appliquer en fonction de la vitesse de rotation de la machine tournante et de la position prédéterminé dans laquelle est le vecteur flux stator,
b) le calculateur envoie des signaux de commande des SPmLL pour commuter dans l'état $V_i$,
c) à chaque échantillonnage, le calculateur calcule, pour le point courant A'($\phi_{s\alpha c}$, $\phi_{s\beta c}$, $\Gamma_c$), le temps restant $dt_{ir}$ d'application de l'état $V_i$ et les temps $dt_{adj}$ et $dt_0$ mis à jour des états futurs $V_{adj}$ et $V_0$,
d) lorsque $dt_{ir} \leq T_e$, le calculateur prévoit l'instant de commutation de l'état $V_i$ vers l'état $V_{adj}$,
e) de façon asynchrone avec les instants d'échantillonnage et de calcul, lorsque l'instant de commutation arrive, le calculateur envoi des signaux de commande des SPmLL pour commuter dans l'état $V_{adj}$,
f) à chaque échantillonnage, le calculateur calcule, pour le point courant B'($\phi_{s\alpha c}$, $\phi_{s\beta c}$, $\Gamma_c$), le temps restant $dt_{adjr}$ d'application de l'état $V_{adj}$ et le temps $dt_0$ mis à jour de l'état futur $V_0$,
g) lorsque $dt_{adjr} \leq T_e$, le calculateur prévoit l'instant de commutation de l'état $V_{adj}$ vers l'état $V_0$,
h) de façon asynchrone avec les instants d'échantillonnage et de calcul, lorsque l'instant de commutation arrive, le calculateur envoi des signaux de commande des SPmLL pour commuter dans l'état $V_0$,
i) à chaque échantillonnage, le calculateur calcule pour le point courant C'($\phi_{s\alpha c}$, $\phi_{s\beta c}$, $\Gamma_c$) le temps restant $dt_{0r}$ d'application de l'état $V_0$,
j) lorsque $dt_{0r} \leq T_e$, prévoit l'instant de commutation de l'état $V_0$ vers l'état $V'_i$, en outre le calculateur connaît la nouvelle triplette unique ($V'_0$, $V'_i$, $V'_{adj}$) permettant de passer àe la position prédéterminée qui va être atteinte à la position prédéterminée suivante du vecteur flux stator, et
k) de façon asynchrone avec les instants d'échantillonnage et de calcul, lorsque l'instant de commutation arrive, le calculateur envoi des signaux de commande des SPmLL pour commuter dans l'état $V'_i$,

le calculateur traitant la nouvelle triplette ($V'_0$, $V'_i$, $V'_{adj}$) selon les étapes c) à k).

Dans un exemple de calcul selon l'invention (figures 4, 5), sur le segment AB l'état $V_i$ est appliqué. A chaque instant d'échantillonnage, le calculateur calcule, pour le point A' courant, les temps d'applications en résolvant le système

$$\left| \begin{array}{l} \theta(t_f = \tfrac{1}{2} T_d) = \theta_f \\ \Gamma(t_f = \tfrac{1}{2} T_d) = \Gamma_{ref} \\ \phi_S^2(t_f = \tfrac{1}{2} T_d) = \phi_S{}^2{}_{ref} \end{array} \right.$$

où $\theta$ est l'angle fixé pour arriver au point D imposé a priori.

Lors de l'étape c), le calculateur résout le système linéaire suivant :

$$\left| \begin{array}{ccc} \overset{\circ}{\phi}_{s\alpha}(V_i) & \overset{\circ}{\phi}_{s\alpha}(V_{adj}) & \overset{\circ}{\phi}_{s\alpha}(V_0) \\ \overset{\circ}{\phi}_{s\beta}(V_i) & \overset{\circ}{\phi}_{s\beta}(V_{adj}) & \overset{\circ}{\phi}_{s\beta}(V_0) \\ \overset{\circ}{\Gamma}(V_i) & \overset{\circ}{\Gamma}(V_{adj}) & \overset{\circ}{\Gamma}(V_0) \end{array} \right| \left| \begin{array}{c} dt_{ir} \\ dt_{adj} \\ dt_0 \end{array} \right| = \left| \begin{array}{c} \phi_{s\alpha}(D) - \phi_{s\alpha}(A') \\ \phi_{s\beta}(D) - \phi_{s\beta}(A') \\ \Gamma(D) - \Gamma(A') \end{array} \right| \quad (SS1)$$

avec D imposé a priori.

(SS1) permet donc à chaque instant d'échantillonnage sur le segment AB de fournir les trois durée d'application $dt_{ir}$, $dt_{adj}$, $dt_0$.

Lorsque $V_{adj}$ est appliqué (segment BC), la perte du degré de liberté lié à $V_i$ amène le procédé à réduire ses ambitions sur la précision en fin de triplette. L'objectif lié à l'amplitude du flux statorique est abandonné. De ce fait, lors de l'étape f), le calculateur résout le système suivant :

$$\left| \begin{array}{ccc} \overset{\circ}{\phi}_{s\alpha}(V_{adj}) & \overset{\circ}{\phi}_{s\alpha}(V_0) & \phi_{s\beta}(D) \\ \overset{\circ}{\phi}_{s\beta}(V_{adj}) & \overset{\circ}{\phi}_{s\beta}(V_0) & -\phi_{s\alpha}(D) \\ \overset{\circ}{\Gamma}(V_{adj}) & \overset{\circ}{\Gamma}(V_0) & 0 \end{array} \right| \left| \begin{array}{c} dt_{adjr} \\ dt_0 \\ \lambda \end{array} \right| = \left| \begin{array}{c} -\phi_{s\alpha}(B') \\ -\phi_{s\beta}(B') \\ \Gamma(D) - \Gamma(B') \end{array} \right| \quad (SS2)$$

où $\lambda$ est un paramètre définissant la position finale prévisible du point courant B' sur une droite contenue dans le plan statorique, passant par l'axe de couple et parallèle à la position prédéterminée du vecteur de flux statorique qui doit être atteinte.

(SS2) permet donc à chaque instant d'échantillonnage sur le segment BC de fournir les deux durée d'application $dt_{adjr}$, $dt_0$, ainsi que la valeur de $\lambda$.

Lorsque $V_0$ est appliqué (segment CD), la perte du degré de liberté lié à $V_{adj}$ amène le procédé à réduire ses ambitions sur la précision en fin de triplette. Seul l'objectif de couple est maintenu. Cela est judicieusement choisi car la vitesse mécanique est élevée. De ce fait, lors de l'étape i), le calculateur calcule pour le point courant C'($\phi_{s\alpha c}$, $\phi_{s\beta c}$, $\Gamma_c$) le temps restant $dt_{0r}$ d'application de l'état $V_0$ en résolvant le système suivant :

$$\Gamma(D) = \Gamma(A) + [\Gamma_{ref} - \Gamma_{moyen}]$$

$$dt_{0r} = \frac{\Gamma(D) - \Gamma(t_c)}{\overset{\circ}{\Gamma}(V_0)}$$

où $\Gamma_{moyen}$ est le couple électromagnétique moyen calculé sur l'intervalle de temps $dt_i + dt_{adj}$.

Sur la représentation de la figure 5, les cercles $\eta_{cal}$, $\eta_{ref}$ ont le même rayon. Le calculateur pourrait néanmoins déterminer des cercles ayant un rayon différent.

Le temps $dt_0$ d'application de l'état nul est une fonction décroissante de la vitesse de rotation de la machine tournante, et égal à zéro au-delà d'une valeur prédéterminée de la vitesse de rotation de la machine tournante.

Cette dernière caractéristique permet de passer très simplement de la stratégie de contrôle synchrone à la stratégie de pleine onde. Dans un premier temps le temps dt0 d'application de l'état nul tend vers zéro, puis s'annule. le système est alors en pleine onde.

On comprend aisément que dans le mode pleine onde, le fait que le temps $dt_0$ d'application de l'état nul est égal à zéro, ne permet plus de régler directement le couple. La machine tournante sera alors piloté en couple par l'intermédiaire du flux selon les règles suivantes :

Pour l'augmentation du couple $\Gamma$, on doit augmenter l'angle entre le flux stator et le flux rotor. Pour cela on accélère la rotation du vecteur flux stator. Cela implique de diminuer la norme du flux stator.

Pour la diminution du couple $\Gamma$, on doit diminuer l'angle entre le flux stator et le flux rotor. Pour cela on réduit la vitesse de rotation du vecteur flux stator. Cela implique d'augmenter la norme du flux stator.

Pour réaliser ce pilotage, il est utilisé un correcteur de flux statorique appliqué, fonction de la différence entre le couple instantané et le couple de consigne.

Le couple est régulé par le correcteur de flux en fonction de $\Delta\Gamma = \Gamma_{ref} - \Gamma_c$ suivant les règles suivantes :

Pour $\Delta\Gamma > 0$ , le correcteur diminue la norme du flux stator;

Pour $\Delta\Gamma < 0$, le correcteur augmente la norme du flux stator.

L'invention concerne aussi un système d'asservissement pour mettre en oeuvre le procédé décrit ci-dessus.

L'invention concerne enfin une machine tournante pourvue d'un tel système d'asservissement.

Bien entendu, l'invention n'est pas limitée au mode de mise en oeuvre ou de réalisation décrit, mais elle est susceptible de nombreuses variantes accessibles à l'homme du métier sans que l'on s'écarte de l'invention. En particulier, le nombre de phases, le nombre de niveaux logiques de chaque yole unique, l'espace de calcul, les systèmes de calcul peuvent varier sans que l'on s'écarte de l'invention.

**Revendications**

1. Procédé de régulation d'une machine tournante à n phases alimentée en courant alternatif par l'intermédiaire d'un onduleur de tension comprenant n SPmLL définissant $m^n$ états du vecteur tension de phase stator, ladite machine étant asservie en couple électromagnétique $\Gamma$ et en flux statorique $|\phi_S|$ à des consignes $\Gamma_{ref}$, $|\phi_S|_{ref}$ par un système d'asservissement pouvant suivre différentes stratégies de contrôle, chaque stratégie ayant des conditions d'application, ledit système d'asservissement comprenant un ensemble de capteurs dont les valeurs captées sont transmises à un observateur-échantillonneur, les sorties de l'observateur, échantillonnées selon une période d'échantillonnage donnée $T_e$, étant injectées dans un calculateur, ledit calculateur restituant en sortie des signaux de commande des SPmLL de l'onduleur de tension,

caractérisé en ce que,

le calculateur calcule, en fonction des conditions d'application de la stratégie de contrôle utilisée, d'une part une succession de n états du vecteur tension de phase pour rapprocher le couple $\Gamma$ et le flux $|\phi_S|$ des consignes $\Gamma_{ref}$, $|\phi_S|_{ref}$, par commutation successive desdits n états de la succession, et d'autre part le temps d'application $dt_k$ $k \in \{1,...,n\}$ de chacun desdits n états de la succession,

à chaque échantillonnage, le calculateur calcule le temps d'application restant de l'état en cours et les temps d'application mis à jour des états futurs du vecteur de phase, et

de façon asynchrone avec les instants d'échantillonnage et de calcul, à la fin du temps d'application de l'état en cours, le calculateur envoi des signaux de commande des SPmLL pour commuter de l'état en cours vers l'état suivant.

2. Procédé de régulation selon la revendication 1 le calculateur effectuant les calculs dans un référentiel de calcul tridimensionnel orthogonal comprenant le plan statorique ($\phi_{s\alpha}$, $\phi_{s\beta}$) du flux stator $\phi_S$ et un axe, perpendiculaire audit plan statorique ($\phi_{s\alpha}$, $\phi_{s\beta}$), représentant le couple $\Gamma$, les consignes $\Gamma_{ref}$, $|\phi_S|_{ref}$, étant représentées par un cercle $\eta_{ref}$ contenu dans un plan parallèle au plan statorique ($\phi_{s\alpha}$, $\phi_{s\beta}$), centré sur ledit axe perpendiculaire, ayant un rayon de $|\phi_S|_{ref}$ et interceptant ledit axe perpendiculaire en $\Gamma_{ref}$, les valeurs $\Gamma$, $\phi_S$ fournies par la machine tournante, étant représentées par un point A ($\phi_{s\alpha}$, $\phi_{s\beta}$, $\Gamma$) sur un cercle $\eta$ contenu dans un plan parallèle au plan statorique ($\phi_{s\alpha}$, $\phi_{s\beta}$), centré sur ledit axe perpendiculaire, ayant un rayon de $|\phi_S|$ et interceptant ledit axe perpendiculaire en $\Gamma$;

le procédé étant caractérisé en ce que la stratégie de contrôle est une stratégie asynchrone avec la fréquence de rotation de la machine tournante dans laquelle la succession de n états du vecteur tension est calculée pour que le point A ($\phi_{s\alpha}$, $\phi_{s\beta}$ , $\Gamma$) rallie un point D quelconque d'un cercle $\eta_{cal}$, centré sur ledit axe perpendiculaire, ayant

un rayon de $|\phi_S|_{cal}$ et interceptant ledit axe perpendiculaire en $\Gamma_{cal}$ par application successive des n états, dans un temps donné prédéterminé, ledit calculateur calculant l'équation du cercle $\eta_{cal}$ pour que sur la durée d'application de la succession, le couple $\Gamma$ moyen et le flux statorique $|\phi_S|$ moyen générés soient sensiblement égaux respectivement aux consignes $\Gamma_{ref}$, $|\phi_S|_{ref}$.

3. Procédé de régulation selon la revendication 2 caractérisé en ce que, n étant égal à trois, la stratégie de contrôle est basée sur l'application d'un cycle SOCMLI telle que le calculateur recherche l'existence d'une triplette unique d'états $(V_0, V_i, V_{adj})$ $i \in \{2...m^n-1\}$ du vecteur tension constituant une succession de trois états, comprenant un état de départ $V_i$, un des deux états $V_{adj}$ adjacent à $V_i$ et un état nul $(V_0)$, dont les temps d'application respectifs $dt_i$, $dt_{adj}$, $dt_0$ sont positifs et tels que leur somme soit égale à la moitié de la période de découpage $T_d$ de l'onduleur.

4. Procédé de régulation selon la revendication 3 caractérisé en ce que,

   a) le calculateur cherche la triplette unique $(V_0, V_i, V_{adj})$ $i \in \{2...m^n-1\}$, et calcule un point d'arrivée présumé D' sur le cercle $\eta_{cal}$, puis
   b) il envoi des signaux de commande des SPmLL pour commuter dans l'état $V_i$, puis,
   c) à chaque échantillonnage, le calculateur calcule, pour le point courant $A'(\phi_{s\alpha c}, \phi_{s\beta c}, \Gamma_c)$, le temps restant $dt_{ir}$ d'application de l'état $V_i$ et les temps $dt_{adj}$ et $dt_0$ mis à jour des états futurs $V_{adj}$ et $V_0$, puis,
   d) lorsque $dt_{ir} \le T_e$, le calculateur prévoit l'instant de commutation de l'état $V_i$ vers l'état $V_{adj}$, puis,
   e) de façon asynchrone avec les instants d'échantillonnage et de calcul, lorsque l'instant de commutation arrive, le calculateur envoi des signaux de commande des SPmLL pour commuter dans l'état $V_{adj}$, puis,
   f) à chaque échantillonnage, le calculateur calcule, pour le point courant $B'(\phi_{s\alpha c}, \phi_{s\beta c}, \Gamma_c)$, le temps restant $dt_{adjr}$ d'application de l'état $V_{adj}$ et le temps $dt_0$ mis à jour de l'état futur $V_0$, puis,
   g) lorsque $dt_{adjr} \le T_e$, le calculateur prévoit l'instant de commutation de l'état $V_{adj}$ vers l'état $V_0$, puis,
   h) de façon asynchrone avec les instants d'échantillonnage et de calcul, lorsque l'instant de commutation arrive, le calculateur envoi des signaux de commande des SPmLL pour commuter dans l'état $V_0$, puis,
   i) à chaque échantillonnage, le calculateur calcule pour le point courant $C'(\phi_{s\alpha c}, \phi_{s\beta c}, \Gamma_c)$ le temps restant $dt_{0r}$ d'application de l'état $V_0$, puis,
   j) lorsque $dt_{0r} \le T_e$, le calculateur recherche une nouvelle triplette unique $(V'_0, V'_i, V'_{adj})$ $i \in \{2...m^n-1\}$, et prévoit l'instant de commutation de l'état $V_0$ vers l'état $V'_i$, puis,
   k) de façon asynchrone avec les instants d'échantillonnage et de calcul, lorsque l'instant de commutation arrive, le calculateur envoi des signaux de commande des SPmLL pour commuter dans l'état $V'_i$, puis,

   le calculateur traitant la nouvelle triplette $(V'_0, V'_i, V'_{adj})$ selon les étapes c) à k).

5. Procédé de régulation selon la revendication 4 caractérisé en ce que

   lors de l'étape c), le calculateur résout le système suivant :

$$
\begin{vmatrix}
\overset{\circ}{\phi}_{s\alpha}(V_i) & \overset{\circ}{\phi}_{s\alpha}(V_{adj}) & \overset{\circ}{\phi}_{s\alpha}(V_0) & \phi_{s\beta}(D') \\
\overset{\circ}{\phi}_{s\beta}(V_i) & \overset{\circ}{\phi}_{s\beta}(V_{adj}) & \overset{\circ}{\phi}_{s\beta}(V_0) & -\phi_{s\alpha}(D') \\
\overset{\circ}{\Gamma}(V_i) & \overset{\circ}{\Gamma}(V_{adj}) & \overset{\circ}{\Gamma}(V_0) & 0 \\
1 & 1 & 1 & 0
\end{vmatrix}
\begin{vmatrix} dt_{ir} \\ dt_{adj} \\ dt_0 \\ \lambda \end{vmatrix}
=
\begin{vmatrix} \phi_{s\alpha}(D) - \phi_{s\alpha}(A') \\ \phi_{s\beta}(D) - \phi_{s\beta}(A') \\ \Gamma(D) - \Gamma(A') \\ \tfrac{1}{2}T_d - t_c \end{vmatrix}
$$

   où $\lambda$ est un paramètre définissant la position du point D sur une tangente au cercle $\eta_{cal}$ en D', et
   lors de l'étape f), le calculateur résout le système suivant par la méthode des moindres carrés:

$$
\begin{vmatrix}
\overset{\circ}{\phi}_{s\alpha}(V_{adj}) & \overset{\circ}{\phi}_{s\alpha}(V_0) & \phi_{s\beta}(D') \\
\overset{\circ}{\phi}_{s\beta}(V_{adj}) & \overset{\circ}{\phi}_{s\beta}(V_0) & -\phi_{s\alpha}(D') \\
\overset{\circ}{\Gamma}(V_{adj}) & \overset{\circ}{\Gamma}(V_0) & 0 \\
1 & 1 & 0
\end{vmatrix}
\begin{vmatrix}
dt_{adjr} \\
dt_0 \\
\lambda
\end{vmatrix}
=
\begin{vmatrix}
\phi_{s\alpha}(D) - \phi_{s\alpha}(B') \\
\phi_{s\beta}(D) - \phi_{s\beta}(B') \\
\Gamma(D) - \Gamma(B') \\
\tfrac{1}{2}T_d - t_c
\end{vmatrix}
$$

6. Procédé selon la revendication 4 ou 5 caractérisé en ce que lors de l'étape i)

le calculateur calcule pour le point courant $C'(\phi_{s\alpha c}, \phi_{s\beta c}, \Gamma_c)$ le temps restant $dt_{0r}$ d'application de l'état $V_0$ en résolvant par la méthode des moindres carrés le système suivant :

$$
\begin{vmatrix}
\overset{\circ}{\Gamma}(V_0) \\
1
\end{vmatrix}
\begin{vmatrix}
dt_0
\end{vmatrix}
=
\begin{vmatrix}
\Gamma(D) - \Gamma(C') \\
\tfrac{1}{2}T_d - t_c
\end{vmatrix}
$$

7. Procédé selon la revendication 4 caractérisé en ce que lors de l'étape d) le calculateur prévoit la commutation de l'état $V_i$ vers l'autre état adjacent de $V_i$ afin de recadrer la trajectoire du point B' vers le cercle $\eta_{cal}$.

8. Procédé selon la revendication 4 ou 5 caractérisé en ce que lorsqu'il n'existe pas de triplette unique $(V_0, V_i, V_{adj})$, alors le calculateur recherche une succession de deux états $(V_i, V_{adj})$ différents d'un état nul permettant de rapprocher au mieux le point A $(\phi_{s\alpha}, \phi_{\beta}, \Gamma)$ du cercle $\eta_{ref}$ dans l'intervalle de temps $\tfrac{1}{2}T_d$.

9. Procédé de régulation selon la revendication 1, le calculateur effectuant les calculs dans un référentiel de calcul tridimensionnel orthogonal comprenant le plan statorique $(\phi_{s\alpha}, \phi_{s\beta})$ du flux stator $\phi_S$ et un axe, perpendiculaire audit plan statorique $(\phi_{s\alpha}, \phi_{s\beta})$, représentant le couple $\Gamma$, les consignes $\Gamma_{ref}$, $|\phi_S|_{ref}$ étant représentées par un cercle $\eta_{ref}$ contenu dans un plan parallèle au plan statorique $(\phi_{s\alpha}, \phi_{s\beta})$, centré sur ledit axe perpendiculaire, ayant un rayon de $|\phi_S|_{ref}$ et interceptant ledit axe perpendiculaire en $\Gamma_{ref}$, les valeurs $\Gamma$, $\phi_S$ fournies par la machine tournante, étant représentées par un point A $(\phi_{s\alpha}, \phi_{s\beta}, \Gamma)$ sur un cercle $\eta$ contenu dans un plan parallèle au plan statorique $(\phi_{s\alpha}, \phi_{s\beta})$, centré sur ledit axe perpendiculaire, ayant un rayon de $|\phi_S|$ et interceptant ledit axe perpendiculaire en $\Gamma$,

le procédé étant caractérisé en ce que la stratégie de contrôle est une stratégie synchrone avec la fréquence de rotation de la machine tournante dans laquelle la succession de n états du vecteur tension est calculée pour que le point A $(\phi_{s\alpha}, \phi_{s\beta}, \Gamma)$ rallie un point D d'un cercle $\eta_{cal}$, centré sur ledit axe perpendiculaire, ayant un rayon de $|\phi_S|_{cal}$ et interceptant ledit axe perpendiculaire en $\Gamma_{cal}$, par application successive des n états, avec une position finale prédéterminée du vecteur flux statorique dans le plan stator $(\phi_{s\alpha}, \phi_{s\beta})$, ledit calculateur calculant l'équation du cercle $\eta_{cal}$ pour que sur la durée d'application de la succession, le couple $\Gamma$ moyen et le flux statorique $|\phi_S|$ moyen générés soient sensiblement égaux respectivement aux consignes $\Gamma_{ref}$, $|\phi_S|_{ref}$.

10. Procédé de régulation selon la revendication 9 caractérisé en ce que le nombre de position prédéterminées autorisées par tour de flux statorique est fini et fonction d'une plage de vitesse de rotation de la machine tournante.

11. Procédé de régulation selon la revendication 9 et 10 caractérisé en ce que, n étant égal à trois, la stratégie de contrôle est telle que le calculateur connaît une triplette unique d'états $(V_0, V_i, V_{adj})$ $i \in \{2...m^n - 1\}$ du vecteur tension constituant une succession de trois états, comprenant un état de départ $V_i$, un des deux états $V_{adj}$ adjacent à $V_i$ et un état nul $(V_0)$, dont les temps d'application respectifs $dt_i$, $dt_{adj}$, $dt_0$ sont positifs, ladite triplette permettant de rejoindre le cercl $\eta_{cal}$ en un point D connu.

12. Procédé de régulation selon la revendication 11 caractérisé en ce que,

dans une étape d'initialisation de la machine tournante, on met en mémoire dans le calculateur des triplettes $(V_0, V_i, V_{adj})$ $i \in \{2...m^n - 1\}$, pour passer d'une position prédéterminée à une autre position prédéterminée du vecteur flux stator, selon divers plages de vitesse de rotation de la machine tournante, et
en fonctionnement,

a) le calculateur connaît la triplette ($V_0$, $V_i$, $V_{adj}$) à appliquer en fonction de la vitesse de rotation de la machine tournante et de la position prédéterminé dans laquelle est le vecteur flux stator,

b) il envoi des signaux de commande des SPmLL pour commuter dans l'état $V_i$,

c) à chaque échantillonnage, le calculateur calcule, pour le point courant A'($\phi_{s\alpha c}$, $\phi_{s\beta c}$, $\Gamma_c$), le temps restant $dt_{ir}$ d'application de l'état $V_i$ et les temps $dt_{adj}$ et $dt_0$ mis à jour des états futurs $V_{adj}$ et $V_0$,

d) lorsque $dt_{ir} \leq T_e$, le calculateur prévoit l'instant de commutation de l'état $V_i$ vers l'état $V_{adj}$,

e) de façon asynchrone avec les instants d'échantillonnage et de calcul, lorsque l'instant de commutation arrive, le calculateur envoi des signaux de commande des SPmLL pour commuter dans l'état $V_{adj}$,

f) à chaque échantillonnage, le calculateur calcule, pour le point courant B'($\phi_{s\alpha c}$, $\phi_{s\beta c}$, $\Gamma_c$), le temps restant $dt_{adjr}$ d'application de l'état $V_{adj}$ et le temps $dt_0$ mis à jour de l'état futur $V_0$,

g) lorsque $dt_{adjr} \leq T_e$, le calculateur prévoit l'instant de commutation de l'état $V_{adj}$ vers l'état $V_0$,

h) de façon asynchrone avec les instants d'échantillonnage et de calcul, lorsque l'instant de commutation arrive, le calculateur envoi des signaux de commande des SPmLL pour commuter dans l'état $V_0$,

i) à chaque échantillonnage, le calculateur calcule pour le point courant C'($\phi_{s\alpha c}$, $\phi_{s\beta c}$, $\Gamma_c$) le temps restant $dt_{0r}$ d'application de l'état $V_0$,

j) lorsque $dt_{0r} \leq T_e$, prévoit l'instant de commutation de l'état $V_0$ vers l'état $V'_i$, en outre le calculateur connaît la nouvelle triplette unique ($V'_0$, $V'_i$, $V'_{adj}$) permettant de passer de la position prédéterminée qui va être atteinte à la position prédéterminée suivante du vecteur flux stator, et

k) de façon asynchrone avec les instants d'échantillonnage et de calcul, lorsque l'instant de commutation arrive, le calculateur envoi des signaux de commande des SPmLL pour commuter dans l'état $V'_i$,

le calculateur traitant la nouvelle triplette ($V'_0$, $V'_i$, $V'_{adj}$) selon les étapes c) à k).

**13.** Procédé de régulation selon la revendication 12 caractérisé en ce que lors de l'étape c), le calculateur résout le système suivant:

$$
\begin{vmatrix}
\overset{\circ}{\phi}_{s\alpha}(V_i) & \overset{\circ}{\phi}_{s\alpha}(V_{adj}) & \overset{\circ}{\phi}_{s\alpha}(V_0) \\
\overset{\circ}{\phi}_{s\beta}(V_i) & \overset{\circ}{\phi}_{s\beta}(V_{adj}) & \overset{\circ}{\phi}_{s\beta}(V_0) \\
\overset{\circ}{\Gamma}(V_i) & \overset{\circ}{\Gamma}(V_{adj}) & \overset{\circ}{\Gamma}(V_0)
\end{vmatrix}
\begin{vmatrix}
dt_{ir} \\
dt_{adj} \\
dt_0
\end{vmatrix}
=
\begin{vmatrix}
\phi_{s\alpha}(D) - \phi_{s\alpha}(A') \\
\phi_{s\beta}(D) - \phi_{s\beta}(A') \\
\Gamma(D) - \Gamma(A')
\end{vmatrix}
$$

lors de l'étape f), le calculateur résout le système suivant :

$$
\begin{vmatrix}
\overset{\circ}{\phi}_{s\alpha}(V_{adj}) & \overset{\circ}{\phi}_{s\alpha}(V_0) & \phi_{s\beta}(D) \\
\overset{\circ}{\phi}_{s\beta}(V_{adj}) & \overset{\circ}{\phi}_{s\beta}(V_0) & -\phi_{s\alpha}(D) \\
\overset{\circ}{\Gamma}(V_{adj}) & \overset{\circ}{\Gamma}(V_0) & 0
\end{vmatrix}
\begin{vmatrix}
dt_{adjr} \\
dt_0 \\
\lambda
\end{vmatrix}
=
\begin{vmatrix}
-\phi_{s\alpha}(B') \\
-\phi_{s\beta}(B') \\
\Gamma(D) - \Gamma(B')
\end{vmatrix}
$$

où $\lambda$ est un paramètre définissant la position finale prévisible du point courant B' sur une droite contenue dans le plan statorique, passant par l'axe de couple $\Gamma$ et parallèle à la position prédéterminée du vecteur de flux statorique qui doit être atteinte.

**14.** Procédé selon la revendication 12 ou 13 caractérisé en ce que lors de l'étape i)

le calculateur calcule pour le point courant C'($\phi_{s\alpha c}$, $\phi_{s\beta c}$, $\Gamma_c$) le temps restant $dt_{0r}$ d'application de l'état $V_0$ en résolvant le système suivant :

$$\Gamma(D) = \Gamma(A) + [\Gamma_{ref} - \Gamma_{moyen}]$$

$$dt_{0r} = \frac{\Gamma(D) - \Gamma(t_c)}{\Gamma(V_0)}$$

où $\Gamma_{moyen}$ est le couple électromagnétique moyen calculé sur l'intervalle de temps $dt_i + dt_{adj}$.

15. Procédé selon l'une quelconque des revendications 11 à 14 caractérisé en ce que le temps $dt_0$ d'application de l'état nul est une fonction décroissante de la vitesse de rotation de la machine tournante, et égal à zéro au-delà d'une valeur prédéterminée de la vitesse de rotation de la machine tournante.

16. Procédé selon la revendication 15 caractérisé en ce que lorsque le temps $dt_0$ d'application de l'état nul est égal à zéro, le couple est régulé par un correcteur de flux en fonction de $\Delta\Gamma = \Gamma_{ref} - \Gamma_c$ suivant les règles suivantes :

Pour $\Delta\Gamma > 0$ , le correcteur diminue la norme du flux stator;
Pour $\Delta\Gamma < 0$, le correcteur augmente la norme du flux stator.

17. Système d'asservissement d'une machine tournante à n phases alimentée en courant alternatif par l'intermédiaire d'un onduleur de tension comprenant n SPmLL définissant $m^n$ états du vecteur tension de phase stator, le système d'asservissement, pouvant suivre différentes stratégies de contrôle, asservissant la machine en couple électro-magnétique $\Gamma$ et en flux statorique $|\phi_S|$ à des consignes $\Gamma_{ref}$, $|\phi_S|_{ref}$, chaque stratégie ayant des conditions d'application, ledit système d'asservissement comprenant un ensemble de capteurs dont les valeurs captées sont transmises à un observateur-échantillonneur, les sorties de l'observateur, échantillonnées selon une période d'échantillonnage donnée $T_e$, étant injectées dans un calculateur, ledit calculateur restituant en sortie des signaux de commande des SPmLL de l'onduleur de tension, caractérisé en ce qu'il met en oeuvre le procédé selon l'une quelconque des revendication 1 à 16.

18. Machine tournante à n phases alimentée en courant alternatif par l'intermédiaire d'un onduleur de tension com-prenant n SPmLL définissant $m^n$ états du vecteur tension de phase stator, ladite machine étant asservie en couple électromagnétique $\Gamma$ et en flux statorique $|\phi_S|$ à des consignes $\Gamma_{ref}$, $|\phi_S|_{ref}$ par un système d'asservissement pouvant suivre différentes stratégies de contrôle, chaque stratégie ayant des conditions d'application, ledit système d'asservissement comprenant un ensemble de capteurs dont les valeurs captées sont transmises à un observateur-échantillonneur, les sorties de l'observateur, échantillonnées selon une période d'échantillonnage donnée $T_e$, étant injectées dans un calculateur, ledit calculateur restituant en sortie des signaux de commande des SPmLL de l'onduleur de tension, caractérisée en ce que le système d'asservissement est selon la revendication 17.

FIG.1

FIG.2

FIG.3

FIG.4

FIG.5

FIG.6

**Office européen des brevets**

## RAPPORT DE RECHERCHE EUROPEENNE

Numéro de la demande

EP 98 40 0187

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | THOGERSEN P. ET AL.: "Stator flux oriented asynchronous vector modulation for AC-drives" PESC'90 RECORD. 21ST ANNUAL IEEE POWER ELECTRONICS SPECIALISTS CONFERENCE, vol. 2, 1990, SAN ANNEW YORK, USA, pages 641-648, XP002043849 * abrégé * * page 644, alinéa 3 * | 1,3,17, 18 | H02P21/00 H02M7/5387 |
| A | HOFFMANN F ET AL: "FAST TORQUE CONTROL OF AN IGBT-INVERTER-FED THREE-PHASE A.C. DRIVE IN THE WHOLE SPEED RANGE EXPERIMENTAL RESULTS" 19 septembre 1995 , EPE '95: 6TH. EUROPEAN CONFERENCE ON POWER ELECTRONICS AND APPLICATIONS, SEVILLA, SEPT. 19 - 21, 1995, VOL. 3, PAGE(S) 3.399 - 3.404 , EUROPEAN POWER ELECTRONICS AND DRIVES ASSOCIATION XP000538343 * page 3400, colonne de droite; figures 2,3 * | 1,2 | |
| A | HOLTZ J ET AL: "OPTIMAL PULSEWIDTH MODULATION FOR AC SERVOS AND LOW-COST INDUSTRIAL DRIVES" juillet 1994 , IEEE TRANSACTIONS ON INDUSTRY APPLICATIONS, VOL. 30, NR. 4, PAGE(S) 1039 - 1047 XP000469586 * page 1040, alinéa B * | 1,3 | DOMAINES TECHNIQUES RECHERCHES (Int.Cl.6) H02P H02M |

Le présent rapport a été établi pour toutes les revendications

| Lieu de la recherche | Date d'achèvement de la recherche | Examinateur |
|---|---|---|
| LA HAYE | 15 mai 1998 | Bourbon, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)